# EUROPÄISCHE PATENTSCHRIFT

(11) **EP 0 917 546 B1**
(45) Veröffentlichungstag und Bekanntmachung des Hinweises auf die Patenterteilung: **06.06.2001**
(21) Anmeldenummer: 97936671.3
(22) Anmeldetag: 29.07.1997
(51) Int. Cl.: C08F 220/12, C09J 133/06, C09J 7/04

(54) **HAFTKLEBSTOFFE AUF BASIS MEHRSTUFIG AUFGEBAUTER POLYMERISATE**
PRESSURE SENSITIVE MATERIALS BASED ON MULTISTEP CONSTITUTED OF POLYMERIZATES
MATIERES AUTO-ADHESIVES A BASE DE POLYMERES CONSTITUES EN PLUSIEURS ETAPES

(30) Priorität: 09.08.1996 DE 19632202
(43) Veröffentlichungstag der Anmeldung: 26.05.1999
(73) Patentinhaber: BASF AKTIENGESELLSCHAFT, 67056 Ludwigshafen (DE)
(72) Erfinder: SCHULER, Bernhard, D-68199 Mannheim (DE); AUCHTER, Gerhard, D-67098 Bad Dürkheim (DE); TÜRK, Johannes, D-67459 Böhl-Iggelheim (DE); NOORDIJK, Rik, D-67117 Limburgerhof (DE); DOBBELAAR, Johannes, D-67157 Wachenheim (DE); BÄCHER, Reinhard, D-67098 Bad Dürkheim (DE); HÜMMER, Wolfgang, D-67134 Birkenheide (DE)
(86) Internationale Anmeldenummer: EP9704103
(87) Internationale Veröffentlichungsnummer: WO9806764

(56) Entgegenhaltungen:
- DE-A- 3 710 441
- DE-B- 1 091 329
- GB-A- 956 799
- GB-A- 2 168 990

## Beschreibung

Die Erfindung betrifft ein Polymerisat, aufgebaut aus insgesamt:
50 bis 99,98 Gew.-% eines C₁-C₁₂ Alkyl(meth)acrylats a)
0,02 bis 5 Gew.-% einer vinylaromatischen Verbindung b)
0 bis 10 Gew.-% einer ethylenisch ungesättigten Säure oder eines ethylenisch ungesättigten Säureanhydrids c) und
0 bis 40 Gew.-% weiterer Monomere d),
wobei die Gewichtsprozente auf das Polymerisat bezogen sind und das Polymerisat erhältlich ist durch Polymerisieren der Monomeren
   a) bis d) in mindestens zwei Stufen, welche sich in ihrem Gehalt an Vinylaromaten derart unterscheiden, daß der Gehalt an Vinylaromaten in der Vinylaromaten-reichen Stufe mindestens 5 mal so groß ist wie in der Vinylaromaten-armen Stufe
und die Verwendung eines entsprechenden Polymerisats mit einem Gehalt an Monomeren b) von 0,02 bis 10 Gew.-% als Haftklebstoff für Etiketten.

Desweiteren betrifft die Erfindung die Verwendung der Polymerisate oder ihrer wäßrigen Dispersionen als Haftklebestoffe.

Haftklebstoffe bilden einen-bleibenden klebrigen Film, der schon unter geringem Druck bei Raumtemperatur an den verschiedensten Oberflächen haftet (eng.: pressure sensitive adhesives (PSA). Haftklebstoffe dienen zum Herstellen selbstklebender Erzeugnisse wie Selbstklebeetiketten, -bänder oder -folien. Derartige Produkte lassen sich sehr einfach anwenden und ermöglichen ein schnelles Arbeiten beim Verkleben. Es sind im Gegensatz zu Kontaktklebemassen keine Ablüftzeiten erforderlich. Auch eine sog. "offene Zeit", innerhalb der die Verklebung ausgeführt werden muß, existiert nicht. Die Qualität eines selbstklebenden Artikels hängt im wesentlichen davon ab, ob die innere Festigkeit (Kohäsion) und die Haftung des Klebstoffilms auf der zu beklebenden Oberfläche (Adhäsion) entsprechend der Anwendung aufeinander abgestimmt sind.

Insbesondere bei Haftklebstoffen für Etiketten muß die Kohäsion so groß sein, daß beim Stanzen und Schneiden kein Fadenziehen bzw. Kantenaustritt auftritt, da es sonst zu Verschmutzungen der Schneidewerkzeuge und Verklebung der Schnittflächen kommt.

Gleichzeitig soll die Adhäsion auf einem hohen Niveau liegen, um eine gute Haftung auf dem zu beklebenden Substrat zu erreichen.

Adhäsion und Kohäsion sind im allgemeinen nicht unabhängig voneinander optimierbar. Gewünscht sind Maßnahmen, die entweder das Niveau beider Eigenschaften anheben oder zumindest eine Eigenschaft unverändert erhalten, während sich die jeweils andere verbessert.

Haftklebstoffe bzw. Klebstoffe auf Basis von Polymerisaten, welche Styrol enthalten können, sind bereits aus DE-A-3 013 812.
US-A-5 416 134 und EP-A-625 557 bekannt. Die in den Beispielen dieser Veröffentlichungen verwendeten oder hergestellten Polymerisate enthalten jedoch mindestes 4 Gew.-% Styrol. Derartige Copolymerisate zeigen noch nicht das gewünschte Adhäsions-, Kohäsionsniveau, bzw. Adhäsions-, Kohäsionsverhältnis.

Aus US-A-4939190 und EP 215241 sind Haftklebstoffe aus mehrstufig aufgebauten Polymerisaten bekannt.

Aufgabe der vorliegende Erfindung waren daher Polymerisate mit verbesserter Adhäsion und/oder Kohäsion. Demgemäß wurden die oben definierten Polymerisate und die Verwendung als Haftklebestoffe gefunden.

Das Polymerisat enthält bevorzugt mindestens 0,05 Gew.-% einer vinylaromatischen Verbindung kurz Vinylaromaten genannt und bevorzugt nicht mehr als 5 Gew.-% insbesondere nicht mehr als 3 Gew.%, besonders bevorzugt nicht mehr als 2 Gew.-%, insbesondere nicht mehr als 1,5 Gew.-% der vinylaromatischen Verbindung.

| Bevorzugte Polymerisate sind aufgebaut aus | |
|---|---|
| 50 bis 99,98 Gew.-% | eines C₁-C₁₂ Alkyl(meth)acrylats a) |
| 0,02 bis 10 Gew.-% | einer vinylaromatischen Verbindung b) |
| 0 bis 10 Gew.-% | einer ethylenisch ungesättigten Säure c) |
| 0 bis 40 Gew.-% | weiteren, von a) bis c) verschiedenen Monomeren d) |

| Besonders bevorzugte Polymerisate sind aufgebaut aus | |
|---|---|
| 60 bis 99,95 | Gew.-% a) |
| 0,05 bis 5 | Gew.-% b) |
| 0 bis 5 | Gew.-% c) |
| 0 bis 35 | Gew.-% d) |

| Ganz besonders bevorzugte Polymerisate sind aufgebaut aus | |
|---|---|
| 80 bis 99,75 | Gew.-% a) |
| 0,25 bis 1,5 | Gew.-% b) |
| 0 bis 2 | Gew.-% c) |
| 0 bis 18 | Gew.-% d) |

In einer besonderen Ausführungsform beträgt der Gehalt des Monomeren c) mindestens 0,1 Gew.-%, wobei sich der maximale Gehalt der Komponenten a) entsprechend erniedrigt.

Das Polymerisat ist erhältlich durch Polymerisieren der Monomeren
a) bis d) in mindestens zwei Stufen, welche sich in ihrem Gehalt an Vinylaromaten derart unterscheiden, daß der Gehalt an Vinylaromaten in der Vinylaromaten-reichen Stufe mindestens 5 mal, bevorzugt mindestens 10 mal besonders bevorzugt mindestens 20 mal so groß ist wie in der Vinylaromaten-armen Stufe.

Bevorzugt liegt der Gehalt an Vinylaromaten in der Vinylaromaten-armen Stufe unter 0,2, insbesondere unter 0,05, besonders bevorzugt unter 0,01 Gew.-%, bezogen auf das Polymerisat.

Besonders bevorzugt ist die Vinylaromaten-arme Stufe im wesentlichen frei von Vinylaromaten.

Der Anteil der Vinylaromaten-reichen Stufe beträgt bevorzugt 10-90 Gew.-%, besonders bevorzugt 30 bis 70 Gew.-% und ganz besonders bevorzugt 40 bis 60 Gew.-%; derjenige der Vinylaromaten-armen Stufe beträgt entsprechend bevorzugt 90 bis 10 Gew.-%, besonders bevorzugt 70 bis 30 und ganz besonders bevorzugt 60 bis 40 Gew.-%, wobei die Gewichtsangaben jeweils auf das ganze Polymerisat bezogen sind.

In einer besonderen Ausführungsform ist der Anteil der beiden Stufen ungefähr gleich, d.h. ca. 50 Gew.-%.

Die Reihenfolge der Polymerisation der einzelnen Stufen ist beliebig. So können z.B. zunächst die Monomeren der Vinylaromaten-reichen Stufe und dann die Monomeren der Vinylaromaten-armen Stufe polymerisiert werden oder umgekehrt.

Die Monomeren-Zusammensetzung der einzelnen Stufen kann gleich oder verschieden sein. In einer möglichen Ausführungsform ist z.B der Gehalt der Monomeren c) in der 1. Stufe höher als in der 2. Stufe, z.B. kann die Menge der Monomeren c) in der 1. Stufe mindestens die 1,2 fache Menge der Monomeren c) der 2. Stufe betragen.
Die Polymerisation der Monomeren der einzelnen Stufe erfolgt in Gegenwart des Polymerisationsprodukts der vorangegangenen Stufen.

Die Polymerisation erfolgt bevorzugt durch Emulsionspolymerisation, wobei wäßrige Polymerdispersionen erhalten werden.

Die Monomeren einer Stufe werden vorzugsweise erst dann zum Reaktionsansatz der Emulsionspolymerisation gegeben, wenn die Monomeren der vorangegangenen Stufe der bereits vollständig im Reaktionsansatz vorhanden sind und besonders bevorzugt, wenn die Monomeren der vorangegangen Stufe bereits zu mindestens 60 Gew.-%, ganz besonders bevorzugt bereits zu mindestens 80 Gew.-%, bezogen auf die Monomeren der vorangegangenen Stufe polymerisiert sind (d.h. weniger als 40 Gew.-% bzw. weniger als 20 Gew.-% noch als Monomer vorliegen).

Geeignete C₁ bis C₁₂ Alkyl(meth)acrylate sind insbesondere Methylacrylat, Methylmethacrylat, Ethylacrylat, n-Butylacrylat und 2-Ethylhexylacrylat, n-Butylmethacrylat, t-Butylmethacrylat, iso-Butylacrylat iso-Octylacrylat

In einer besonders bevorzugten Ausführungsform enthalten die Monomeren a) zwingend C₁-C₂-Alkyl(meth)acrylate (Monomere a₁₎) neben C₃-bis-C₁₂-Alkyl(meth)acrylaten (Monomere a₂₎).

Insbesondere handelt es sich bei 5 bis 50 Gew.-% bevorzugt 10 bis 40 Gew.-%, besonders bevorzugt 10 bis 20 Gew.-% der Gesamtmenge der Monomeren a) um Monomere a₁₎, d.h. um Methyl(meth)acrylat oder Ethyl(meth)acrylat, vorzugsweise um Methylacrylat.

Als vinylaromatische Verbindungen seien bevorzugt solche mit bis zu 20 C-Atomen genannt. In Betracht kommen z.B. Vinyltoluol, α- und β-Methylstyrol. Besonders bevorzugt ist Styrol.

Ethylenisch ungesättigte Säuren oder Anhydride c) sind z.B. Maleinsäure, Fumarsäure, Itaconsäure und bevorzugt Acrylsäure bzw. Methacrylsäure, (Meth)acrylsäureanhydrid oder Maleinsäureanhydrid Als weitere Monomere seien insbesondere Alkyl(meth)acrylate mit mehr als 12 C-Atomen in Alkylrest, Hydroxylgruppen enthaltende Monomere, insbesondere C₁-C₁₀-Hydroxyalkyl(meth)acrylate, Vinylester von Carbonsäuren mit 1 bis 20 C-Atomen, z.B. Vinylacetat, Vinylpropionat, Vinylether, vorzugsweise von 1 bis 4 C-Atome enthaltenden Alkoholen, z.B. Vinylmethylether oder Vinylisobutylether und Kohlenwasserstoffe mit 2 bis 8 C-Atomen und ein oder zwei ethylenisch ungesättigten Gruppen, z.B. Ethylen, Butadiene oder Isopren sowie Nitrilgruppen enthaltende Monomere, z.B. (Meth)acrylnitril genannt.

Die Monomeren können vorzugsweise radikalisch oder soweit möglich auch anionisch polymerisiert werden. Sowohl die radikalische als auch die anionische Polymerisation sind als übliche Polymerisationsmethoden dem Fachmann bekannt.

Bei der Emulsionspolymerisation werden ionische und/oder nichtionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewichte im Unterschied zu den Schutzkolloiden üblicherweise unter 2000 g/mol liegen. Selbstverständliche müssen im Falle der Verwendung von Gemischen grenzflächeaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest; C₈- bis C₃₆), ethoxylierte Mono-, Di- und Tri-Alkylphenole (EO-Grad: 3 bis 50, Alkylrest: C₄- bis C₉), Alkalimetallsalze von Dialkylestern der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄ bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel II 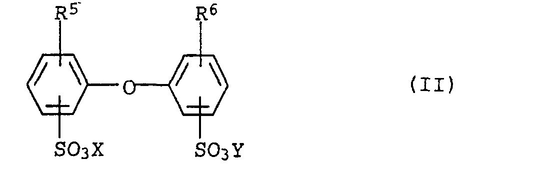 worin R⁵ und R⁶ Wasserstoff oder C₄- bis C₁₄-Alkyl bedeuten und nicht gleichzeitig Wasserstoff sind, und X und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z.B. Dowfax® 2 A1, Emulan® NP 50, Dextrol® OC 50, Emulgator 825, Emulgator 825 S, Emulan® OG, Texapon® NSO, Nekanil® 904 S, Lumiten® I-RA, Lumiten E 3065, Disponil FES, Lutensol AT 18, Steinapol NLS, Emulphor NPS 25.

Die grenzflächenaktive Substanz wird üblicherweise in Mengen von 0,1 bis 10 Gew.-%, bezogen auf die zu polymerisierenden Monomeren verwendet.

Wasserlösliche Initiatoren für die Emulsionspolymerisation sind z.B. Ammonium- und Alkalimetallsalze der Peroxidischwefelsäure, z.B. Natriumperoxodisulfat, Wasserstoffperoxid oder organische Peroxide, z.B. tert-Butylhydroperoxid.

Geeignet sind insbesondere sogenannte Reduktions-, Oxidations(Red-Ox)-Initiator Systeme.

Die Red-Ox-Initiator-Systeme bestehen aus mindestens einem meist anorganischem Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei der Reduktionskomponenten handelt es sich z.B. um Alkalimetallsalze der schwefligen Säure, wie z.B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen (II) sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wäßrigen Lösungen eingesetzt, wobei die untere Konzentration durch die in der Dispersion vertretbare Wassermenge und die obere Konzentration durch die Löslichkeit der betreffenden Verbindung in Wasser bestimmt ist.

Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Weiterhin können bei der Polymerisation auch Regler eingesetzt werden, durch die die Molmasse verringert wird. Geeignet sind z.B. Verbindungen mit einer Thiolgruppe wie tert.-Butylmercaptan, Thioglycolsäureethylacrylester, Mercaptoethanol, Mercaptopropyltrimethoxysilan oder tert.-Dodecylmercaptan. Der Anteil dieser Regler kann insbesondere 0 bis 0,3 Gew.-% bevorzugt 0,02 bis 0,3 Gew.-%, bezogen auf das Polymerisat, betragen.

Der Regler kann in allen Stufen in gleichen Mengen enthalten, aber auch ungleichmäßig verteilt sein; aber auch ungleichmäßig verteilt sein; z.B. kann der Regler in einer besonderen Ausführungsform in der -2. Stufe in mindestens 1,2 bevorzugt mindestens 1,5 facher Menge in Vergleich zur 1. Stufe enthalten sein.

Die Emulsionspolymerisation erfolgt in der Regel bei 30 bis 95, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenf ahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt.

Die Art und Weise, in der der Initiator im Verlauf der radikalischen wäßrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise eingesetzt werden. Im einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt: und der Rest nach Maßgabe des Verbrauchs der Polymerisationszone zugeführt.

Zur Entfernung der Restmonomeren wird üblicherweise auch nach Ende der eigentlichen Emulsionspolymerisation, d.h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wäßrige Dispersionen des Polymeren in der Regel mit Feststoffgehalten von 15 bis 75 Gew.-%, bevorzugt von 40 bis 75 Gew.-% erhalten.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi- oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/ neuer Teilchengeneration/en kann zu einem beliebigen Zeitpunkt erfolgen. Er richtet sich nach den für eine niedrige Viskosität angestrebten Teilchengrößenverteilung.

Die Polymerisate können als Klebstoffe, insbesondere Haftklebstoffe verwendet werden. Insbesondere eigenen sie sich als Haftklebstoffe für Etiketten.

Die Polymerisate werden vorzugsweise in Form ihrer wäßrigen Dispersion verwendet.

Bei der Verwendung als Haftklebstoff wird den Polymerisaten bzw. den wäßrigen Dispersionen der Polymerisate vorzugsweise ein Tackifier, d.h. ein klebrigmachendes Harz zugesetzt. Tackifier sind z.B. aus Adhäsive Age, Juli 1987, Seite 19-23 oder Polym. Mater. Sci. Eng. 61 (1989), Seite 588-592 bekannt.

Tackifier sind z.B. Naturharze, wie Kolophoniumharze und deren durch Disproportionierung oder Isomerisierung, Polymerisation, Dimerisation, Hydrierung entstehenden Derivate. Diese können in ihrer Salzform (mit z.B. ein- oder mehrwertigen Gegenionen (Kationen)) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit.

Desweiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, α-Methylstyrol, Vinyltoluol Verwendung.

Als Tackifier werden zunehmend auch Polyacrylate, welche ein geringes Molgewicht aufweisen, verwendet. Vorzugsweise haben diese Polyacrylate ein gewichtsmittleres Molekulargewicht M_{w} unter 30 000. Die Polyacrylate bestehen bevorzugt zu mindestens 60, insbesondere mindestens 80 Gew.-% aus C₁-C₈ Alkyl(meth)acrylaten.

Bevorzugte Tackifier sind natürliche oder chemisch modifizierte Kolophoniumharze. Kolophoniumharze bestehen zum überwiegenden Teil aus Abietinsäure oder Abietinsäurederivaten.

Die Tackifier können in einfacher Weise den erfindungsgemäßen Polymerisaten, bevorzugt den wäßrigen Dispersionen der Polymerisate zugesetzt werden. Vorzugsweise liegen die Tackifier dabei selber in Form einer wäßrigen Dispersion vor.

Die Gewichtsmenge der Tackifier beträgt vorzugsweise 5 bis 100 Gew.-Teile. besonders bevorzugt 10 bis 50 Gew.-Teile. bezogen auf 100 Gew.-Teile Polymerisat. (fest/fest).

Neben Tackifiern können z.B. noch Additive z.B. Verdickungsmittel, Entschäumer, Weichmacher, Pigmente, Netzmittel oder Füllstoffe bei der Verwendung als Klebstoff bzw. Haftklebstoff Verwendung finden.

Bei der Verwendung als Klebstoff bzw. Haftklebstoff können die erfindungsgemäßen Polymerisate bzw. wäßrigen Dispersionen oder wäßrigen Zubereitungen durch übliche Methoden, z.B. durch Rollen, Rakeln, Streichen etc. auf Substrate, z.B. Papier oder Polymer-Folien, bevorzugt bestehend aus Polyethylen, Polypropylen, das biaxial oder monoaxial verstreckt sein kann, Polyethylenterephthalat, Polyvinylchlorid, Polystyrol, Polyamid oder Metall aufgebracht werden. Das Wasser kann bevorzugt durch Trocknung bei 50 bis 150°C entfernt werden. Zur späteren Verwendung kann die mit Klebstoff bzw. Haftklebstoff beschichtete Seite der Substrate, z.B. der Etiketten, mit einem Releasepapier, z.B. mit einem silikonisierten Papier, abgedeckt werden.

Die Polymerisate zeigen bei der Verwendung als Klebstoffe eine verbesserte Kohäsion, bzw. ein verbessertes Adhäsions-/Kohäsionsverhältnis

### Beispiele

### Prüfmethoden

### a) Herstellung der Prüfstreifen

Die zu prüfende Dispersion wird im Verhältnis 75/25 (bezogen auf Feststoff) mit einer handelsüblichen wäßrigen Kolophoniumharzester-Dispersion (Tacolyn 3179, Fa. Hercules) abgemischt. Die Mischung wird mit einer Rakel in dünner Schicht auf ein silikonisiertes Papier aufgetragen und 3 min bei 90°C getrocknet. Die Spalthöhe der Rakel wird dabei so gewählt, daß sich für den getrockneten Klebstoffe eine Auftragsmenge von 19-21 g/m² ergibt. Auf den getrockneten Klebstoff wird handelsübliches weißes Etikettenpapier (Flächengewicht. 80 g/m²) aufgelegt und mit einem Handroller fest angerollt. Das so hergestellte Etikettenlaminat wird in Streifen von 0,5 inch und von 2 cm Breite geschnitten. Diese Streifen werden vor der Prüfung mindestens 24h im Normklima gelagert.

### b) Prüfung der Scherfestigkeit als Maß für die Kohäsion (in Anlehnung an FINAT FTM 7)

Nach Abziehen des silikonisierten Papiers wird der Etiketten-Prüfstreifen so auf den Rand eines Prüfblechs aus Edelstahl verklebt, daß sich eine Verklebungsfläche von 0,5 inch x 0,5 inch ergibt. 20 Minuten nach dem Verkleben wird am überstehenden Ende des Papierstreifens ein 500 g-Gewichts befestigt und das Prüfblech senkrecht aufgehängt. Umgebungsbedingungen: 23°C, 50 % relative Luftfeuchtigkeit. Als Scherfestigkeit wird die Zeit bis zum Versagen der Verklebung unter Einfluß des Gewichts als Mittelwert aus den Ergebnissen von drei Prüfkörpern in Minuten angegeben.

### c) Prüfung der Schälfestigkeit als Maß für die Adhäsion (in Anlehnung an FINAT FTM 1)

Nach Abziehen des silikonisierten Papiers wird ein 2 cm breiter Etiketten-Prüfstreifen auf ein Prüfblech aus Edelstahl verklebt. Umgebungsbedingungen: 23°C, 50 % relative Luftfeuchtigkeit. 1 Minute nach der Verklebung wird der Streifen mit Hilfe einer Zugprüfmaschine in einem Winkel von 180°C mit einer Geschwindigkeit von 75 mm/min abgezogen. Als Schälfestigkeit wird die dafür im Mittel erforderliche Kraft in N/2cm als Mittelwert aus den Ergebnissen von drei Prüfkörpern angegeben. Zusätzlich wird das Bruchbild beurteilt. Dabei bedeuten:
- A: adhäsiver Bruch, kein Rückstand auf dem Edelstahlblech
- K: kohäsiver Bruch (Trennung im Klebstoff)
- F: Film, dünner, nicht klebender Film auf dem Edelstahlblech; Klebstoff bleibt auf dem Papierstreifen
- PR: Papier reißt

### Vergleichsbeispiel 1:

In einem Polymerisationsreaktor wird eine Lösung von 0,75 g Ascorbinsäure in 328 g Wasser auf 85°C unter Rühren erwärmt und dann unter weiterem Rühren eine Lösung von 0,6 g Natriumperoxodisulfat in 8 g Wasser zugegeben. Nach 5 min wird Zulauf 1 gestartet und in den ersten 10 min mit einer Zulaufgeschwindigkeit von 1,9 g/min dosiert. Dann wird für die nächsten 10 min die Zulaufgeschwindigkeit von Zulauf 1 auf 3,8 g/min und dann für weitere 10 min auf 5,7 g/min erhöht. Die Zulaufgeschwindigkeit wird dann auf 9,96 g/min gesteigert und über weitere 180 min konstant gehalten. Zeitgleich mit Zulauf 1 wird die Zugabe einer Lösung von 5,4 g Natriumperoxodisulfat in 72 g Wasser gestartet und mit konstanter Zulaufgeschwindigkeit in 210 min dosiert. Nach dem Ende des Zulaufs 1 wird noch 15 min bei 85°C gerührt und dann auf 80°C abgekühlt. Bei dieser Temperatur werden unter Rühren zeitgleich 15 g einer 10%igen Lösung von tert.-Butylhydroperoxid in Wasser sowie eine Lösung von 1,5 g Natriumdisulfit in einer Mischung aus 10 g Wasser und 1,4 g Aceton zudosiert.

| Zulauf 1: | |
|---|---|
| 340 g | Wasser, |
| 51,4 g | einer 35%igen wäßrigen Lösung des Natriumsalzes des Schwefelsäurehalbesters von mit 25 Ethylenoxideinheiten ethoxyliertem Nonylphenol |
| 15 g | einer 25%igen wäßrigen Lösung von Natronlauge |
| 1,05 g | tert.-Dodecylmercaptan, |
| 7,5 g | Acrylsäure(AS), |
| 247,5 g | Methylacrylat(MA), |
| 870 g | Butylacrylat(BA), |
| 375 g | 2-Ethylhexylacrylat(EHA). |

### Vergleichsbeispiel 2:

Es wird wie in Vergleichsbeispiel 1 verfahren, mit dem Unterschied, daß in Zulauf 1 30 g des Methylacrylats durch Styrol (s) ersetzt sind.

### Vergleichsbeispiel 3:

In einem Polymerisationsreaktor wird eine Lösung von 0,75 g Ascorbinsäure in 328 g Wasser auf 85°C unter Rühren erwärmt und dann unter weiterem Rühren eine Lösung von 0,6 g Natriumperoxodisulfat in 8 g Wasser zugegeben. Nach 5 min wird Zulauf 1 gestartet und in den ersten 10 min mit Zulaufgeschwindigkeit von 1,9 g/min dosiert. Dann wird für die nächsten 10 min. die Zulaufgeschwindigkeit von Zulauf 1 auf 3,8 g/min. und dann für weitere 10 min auf 5,7 g/min erhöht. Die Zulaufgeschwindigkeit wird dann auf 9,96 g/min gesteigert und über weitere 90 min konstant gehalten. Zeitgleich mit Zulauf 1 wird der Zugabe einer Lösung von 5,4 g Natriumperoxodisulfat in 72 g Wasser gestartet und mit konstanter Zulaufgeschwindigkeit in 210 min dosiert. Unmittelbar nach dem Ende des Zulauf 1 Wird Zulauf 2 gestartet und dem Polymerisationsreaktor mit einer Zulaufgeschwindigkeit von 10,56 g/min zugeführt. Nach dem Ende des Zulaufs 2 wird noch 15 min bei 85°C gerührt und dann auf 80°C abgekühlt. Bei dieser Temperatur werden unter Rühren zeitgleich 15 g einer 10%igen Lösung von tert.-Butylhydroperoxid in Wasser sowie eine Lösung von 1,5 g Natriumdisulfit in einer Mischung aus 10 g Wasser und 1,4 g Aceton zudosiert.

| Zulauf 1: | |
|---|---|
| 167 g | Wasser |
| 25,7 g | einer 35%igen wäßrigen Lösung des Natriumsalzes des Schwefelsäurehalbesters von mit 25 Ethylenoxideinheiten ethoxyliertem Nonylphenol |
| 7,5 g | einer 25%igen wäßrigen Lösung von Natronlauge |
| 0,53 g | tert.-Dodecylmercaptan |
| 3,75 g | Acrylsäure |
| 123,75 g | Methylacrylat |
| 622,5 g | Butylacrylat |

| Zulauf 2: | |
|---|---|
| 167 g | Wasser |
| 25,7 g | einer 35%igen wäßrigen Lösung des Natriumsalzes des Schwefelsäurehalbesters von mit 25 Ethylenoxideinheiten ethoxyliertem Nonylphenol |
| 7,5 g | einer 25%igen wäßrigen Lösung von Natronlauge |
| 0,53 g | tert.-Dodecylmercaptan |
| 3,75 g | Acrylsäure |
| 123,75 g | Methylacrylat |
| 510 g | Butylacrylat |
| 112,5 g | 2-Ethylhexylacrylat |

### Beispiel 1:

Es wird wie in Vergleichsbeispiel 3 verfahren, mit dem Unterschied, daß in Zulauf 2 7,5 g des Methylacrylats durch Styrol ersetzt sind.

### Beispiel 2:

Es wird wie in Beispiel 1 verfahren, nur werden zusätzlich in Zulauf 1
3,75 g des Methylacrylats durch Acrylsäure ersetzt.

### Beispiel 3:

Es wird wie in Beispiel 1 verfahren, nur werden die Zusammensetzungen der Zuläufe 1 und 2 vertauscht.

### Beispiel 4:

Es wird wie in Beispiel 1 verfahren, mit folgenden Zuläufen:

| Zulauf 1: | |
|---|---|
| 162 g | Wasser |
| 15 g | einer 15%igen Lösung von Natriumlaurylsulfat |
| 10 g | einer 30%igen wäßrigen Lösung des Natriumsalzes des Schwefelsäurehalbesters von mit 30 Ethylenoxideinheiten ethoxyliertem Laurylalkohol |
| 7,5 g | einer 25%igen wäßrigen Lösung von Natronlauge |
| 0,3 g | tert. -Dodecylmercaptan |
| 3,75 g | Acrylsäure |
| 123,75 g | Methylacrylat |
| 622,5 g | Butylacrylat |

| Zulauf 2: | |
|---|---|
| 162 g | Wasser |
| 15 g | einer 15%igen Lösung von Natriumlaurylsulfat |
| 10 g | einer 30%igen wäßrigen Lösung des Natriumsalzes des Schwefelsäurehalbesters von mit 30 Ethylenoxideinheiten ethoxyliertem Laurylalkohol |
| 7,5 g | einer 25%igen wäßrigen Lösung von Natronlauge |
| 0,53 g | tert. -Dodecylmercaptan |
| 3,75 g | Acrylsäure |
| 108,75 g | Methylacrylat |
| 510 g | Butylacrylat |
| 112,5 g | 2-Ethylhexylacrylat |
| 15,0 g | Styrol |

### Beispiel 5:

In einem Polymerisationsreaktor wird eine Lösung von 0,55 g Ascorbinsäure in 517 g Wasser auf 85°C unter Rühren erwärmt und dann unter weiterem Rühren eine Lösung von 0,44 g Natriumperoxodisulfat in 8 g Wasser zugegeben. Nach 5 min. werden 10 % von Zulauf 1 auf einmal zugegeben. Nach 5 Minuten wird der Rest von Zulauf 1 in 90 min mit konstanter Zulaufgeschwindigkeit zudosiert. Unmittelbar nach dem Ende des Zulaufs 1 wird Zulauf 2 gestartet und in 90 min mit konstanter Zulaufgeschwindigkeit zugegeben. Zeitgleich mit Zulauf 1 wird die Zugabe einer Lösung von 4 g Natriumperoxodisulfaten 72 g Wasser gestartet und mit konstanter Zulaufgeschwindigkeit in 180 min dosiert. Nach dem Ende des Zulaufs 2 wird noch 15 min bei 85°C gerührt und dann auf 80°C abgekühlt. Bei dieser Temperatur werden unter Rühren zeitgleich 15 g einer 10%igen Lösung von tert.-Butylhydroperoxid in Wasser sowie eine Lösung von 1,5 g Natriumdisulfit in einer Mischung aus 10 g Wasser und 1,4 g Aceton zudosiert.

| Zulauf 1: | |
|---|---|
| 235 g | Wasser |
| 18,9 g | einer 35%igen wäßrigen Lösung des Natriumsalzes des Schwefelsäurehalbesters von mit 25 Ethylenoxideinheiten ethoxyliertem Nonylphenol |
| 5,5 g | einer 25%igen wäßrigen Lösung von Natronlauge |
| 0,39 g | tert.-Dodecylmercaptan |
| 2,75 g | Acrylsäure |
| 90,75 g | Methylacrylat |
| 456,5 g | Butylacrylat |

| Zulauf 2: | |
|---|---|
| 235 g | Wasser |
| 18,9 g | einer 35%igen wäßrigen Lösung des Natriumsalzes des Schwefelsäurehalbesters von mit 25 Ethylenoxideinheiten ethoxyliertem Nonylphenol |
| 5,5 g | einer 25%igen wäßrigen Lösung von Natronlauge |
| 0,39 g | tert. -Dodecylmercaptan |
| 2,75 g | Acrylsäure |
| 79,75 g | Methylacrylat |
| 374 g | Butylacrylat |
| 82,5 g | 2-Ethylhexylacrylat |
| 11.0 g | Stvrol |

### Beispiel 6:

Es wird wie in Beispiel 1 verfahren, nur daß in Zulauf 1 112,5 g des Butylacrylats durch 112,5 g 2-Ethylhexylacrylat ersetzt werden.

### Beispiel 7:

Es wird wie in Beispiel 1 verfahren, mit folgenden Zuläufen:

| Zulauf 1: | |
|---|---|
| 167 g | Wasser |
| 25,7 g | einer 35%igen wäßrigen Lösung des Natriumsalzes des Schwefelsäurehalbesters von mit 25 Ethylenoxideinheiten ethoxyliertem Nonylphenol |
| 7,5 g | einer 25%igen wäßrigen Lösung von Natronlauge |
| 0,53 g | tert.-Dodecylmercaptan |
| 15,0 g | Acrylsäure |
| 112,5 g | Methylacrylat |
| 622,5 g | Butylacrylat |

| Zulauf 2: | |
|---|---|
| 167g | Wasser |
| 25,7 g | einer 35%igen wäßrigen Lösung des Natriumsalzes des Schwefelsäurehalbesters von mit 25 Ethylenoxideinheiten ethoxyliertem Nonylphenol |
| 7,5 g | einer 25%igen wäßrigen Lösung von Natronlauge |
| 0,53 g | tert.-Dodecylmercaptan |
| 7,5 g | Acrylsäure |
| 90,0 g | Methylacrylat |
| 510,0 g | Butylacrylat |
| 112,5 g | 2-Ethylhexylacrylat |
| 30,0 g | Styrol |

**Tabelle 1:**

| Zusammensetzung der Copolymerisate | | | | | |
|---|---|---|---|---|---|
| | AS. | MA | BA | EHA | S |
| Vergleichsbeispiel 1 | | | | | |
| 1. Stufe | 0,5 | 16,5 | 58 | 25 | - |
| 2. Stufe | - | - | - | - | - |
| Vergleichsbeispiel 2 | | | | | |
| 1. Stufe | 0,5 | 14,5 | 58 | 25 | 2 |
| 2. Stufe | - | - | - | - | - |
| Vergleichsbeispiel 3 | | | | | |
| 1. Stufe | 0,25 | 8,25 | 41,5 | - | - |
| 2. Stufe | 0,25 | 8,25 | 34 | 7,5 | - |
| Beispiel 1 | | | | | |
| 1. Stufe | 0,25 | 8,25 | 41,5 | - | - |
| 2. Stufe | 0,25 | 7,75 | 34 | 7,5 | 0,5 |
| Beispiel 2 | | | | | |
| 1. Stufe | 0,5 | 8,0 | 41,5 | - | - |
| 2. Stufe | 0,25 | 7,75 | 34 | 7,5 | 0,5 |
| Beispiel 3 | | | | | |
| 1. Stufe | 0,25 | 7,75 | 34 | 7,5 | 0,5 |
| 2. Stufe | 0,25 | 8,25 | 41,5 | - | - |
| Beispiel 4 | | | | | |
| 1. Stufe | 0,25 | 8,25 | 41,5 | - | - |
| 2. Stufe | 0,25 | 7,25 | 34 | 7,5 | 1 |
| | AS | MA | BA | EHA | S |
| Beispiel 5 | | | | | |
| 1. Stufe | 0,25 | 8,25 | 41,5 | - | - |
| 2. Stufe | 0,25 | 7,25 | 34 | 7,5 | 1 |
| Beispiel 6 | | | | | |
| 1. Stufe | 0,25 | 8,25 | 34 | 7,5 | - |
| 2. Stufe | 0,25 | 7,75 | 34 | 7,5 | 0,5 |
| Beispiel 7 | | | | | |
| 1. Stufe | 1 | 7,5 | 41,5 | - | - |
| 2. Stufe | 0,5 | 6 | 34 | 7,5 | 2 |

**Tabelle 2:**

| Klebewerte | | | | |
|---|---|---|---|---|
| | Feststoffgehalt | Schälfestigkeit | | Kohäsion |
| | (%) | (N/2cm) | BB* | (min) |
| Vergleichsbeispiel 1 | 65,3 | 6,8 | F | 42 |
| Vergleichsbeispiel 2 | 65,2 | 7,3 | F | 48 |
| Vergleichsbeispiel 3 | 64,2 | 10,2 | K/PR | 44 |
| Beispiel 1 | 65,5 | 19,1 | K/PR | 49 |
| Beispiel 2 | 65,3 | 17,2 | K/PR | 69 |
| Beispiel 3 | 65,2 | 17,8 | K/PR | 56 |
| Beispiel 4 | 65,4 | 21,2 | K/PR | 38 |
| Beispiel 5 | 49,8 | 22,1 | K/PR | 35 |
| Beispiel 6 | 65,5 | 18,6 | F/K | 55 |
| Beispiel 7 | 64,5 | 19,3 | F | 33 |

| | | | | |
|---|---|---|---|---|
| *BB: Bruchbild | | | | |

## Patentansprüche

1. Polymerisat, aufgebaut aus insgesamt
50 bis 99,98 Gew.-% eines C₁-C₁₂ Alkyl(meth)acrylats a)
0,02 bis 5 Gew.-% einer vinylaromatischen Verbindung b)
0 bis 10 Gew.-% einer ethylenisch ungesättigten Säure oder eines ethylenisch ungesättigten Säureanhydrids c) und
0 bis 40 Gew.-% weiterer Monomere d), wobei die Gewichtsprozente auf das Polymerisat bezogen sind und das Polymerisat erhältlich ist durch Polymerisieren der Monomeren a) bis d) in mindestens zwei Stufen, welche sich in ihrem Gehalt an Vinylaromaten derart unterscheiden, daß der Gehalt an Vinylaromaten in der Vinylaromaten-reichen Stufe mindestens 5 mal so groß ist wie in der Vinylaromaten-armen Stufe.

2. Polymerisat gemäß Anspruch 1 erhältlich durch Emulsionspolymerisation

3. Wäßrige Dispersion, enthaltend ein Polymerisat gemäß Anspruch 1 oder 2.

4. Verwendung einer wäßrigen Dispersion eines Polymerisats aufgebaut aus insgesamt
50 - 99,98 Gew.-% eines C₁-C₁₂-Alkyl(meth)acrylats a)
0,02 bis 10 Gew.-% einer vinylaromatischen Verbindung b)
0 bis 10 Gew.-% einer ethylenisch ungesättigten Säure oder eines ethylenisch ungesättigten Säureanhydrids c) und
0 bis 40 Gew.-% weiterer Monomere d), wobei die Gewichtsprozente auf das Polymerisat bezogen sind und das Polymerisat erhältlich ist durch Polymerisieren der Monomeren a) bis d) in mindestens zwei Stufen, welche sich in ihrem Gehalt an Vinylaromaten derart unterscheiden, daß der Gehalt an Vinylaromaten in der Vinylaromaten-reichen Stufe mindestens 5 mal so groß ist wie in der Vinylaromaten-armen Stufe als Haftklebstoff.

5. Verwendung gemäß Anspruch 4 als Haftklebstoff für Etiketten.

6. Haftklebstoff, enthaltend ein Polymerisat, aufgebaut aus insgesamt
50 bis 99,98 Gew.-% eines C₁-C₁₂-Alkyl(meth)acrylats a)
0,02 bis 10 Gew.-% einer vinylaromatischen Verbindung b)
0 bis 10 Gew.-% einer ethylenisch ungesättigten Säure oder eines ethylenisch ungesättigten Säureanhydrids c) und
0 bis 40 Gew.-% weiterer Monomere d),
wobei die Gewichtsprozente auf das Polymerisat bezogen sind und das Polymerisat erhältlich ist durch Polymerisieren der Monomeren a) bis d) in mindestens zwei Stufen, welche sich in ihrem Gehalt an Vinylaromaten derart unterscheiden, daß der Gehalt an Vinylaromaten in der Vinylaromaten-reichen Stufe mindestens 5 mal so groß ist wie in der Vinylaromaten-armen Stufe bzw. eine wäßrige Dispersion des Polymerisats, und zusätzlich ein klebrig-machendes Harz.

7. Mit einem Haftklebstoff gemäß Anspruch 6 beschichtete Substrate.

8. Mit einem Haftklebstoff gemäß Anspruch 6 beschichtete Etiketten.

## Claims

1. A polymer composed overall of
from 50 to 99.98 % by weight of a C₁-C₁₂ alkyl (meth)acrylate a),
from 0.02 to 5 % by weight of a vinylaromatic compound b),
from 0 to 10 % by weight of an ethylenically unsaturated acid or of an ethylenically unsaturated acid anhydride c), and
from 0 to 40 % by weight of further monomers d), the percentages by weight being based on the polymer and the polymer being obtainable by polymerizing the monomers a) to d) in at least two stages which differ in their content of vinylaromatic compounds in such a way that the content of vinylaromatic compounds in the vinylaromatics-rich stage is at least 5 times as great as in the low-vinylaromatics stage.

2. A polymer as claimed in claim 1, obtainable by emulsion polymerization.

3. An aqueous dispersion comprising a polymer as claimed in claim 1 or 2.

4. The use of an aqueous dispersion of a polymer composed overall of
from 50 to 99.98 % by weight of a C₁-C₁₂ alkyl (meth)acrylate a),
from 0.02 to 5 % by weight of a vinylaromatic compound b),
from 0 to 10 % by weight of an ethylenically unsaturated acid or of an ethylenically unsaturated acid anhydride c), and
from 0 to 40 % by weight of further monomers d), the percentages by weight being based on the polymer and the polymer being obtainable by polymerizing the monomers a) to d) in at least two stages which differ in their content of vinylaromatic compounds in such a way that the content of vinylaromatic compounds in the vinylaromatics-rich stage is at least 5 times as great as in the low-vinylaromatics stage as a pressure-sensitive adhesive.

5. The use as claimed in claim 4 as a pressure-sensitive adhesive for labels.

6. A pressure-sensitive adhesive comprising a polymer composed overall of
from 50 to 99.98 % by weight of a C₁-C₁₂ alkyl (meth)acrylate a),
from 0.02 to 5 % by weight of a vinylaromatic compound b),
from 0 to 10 % by weight of an ethylenically unsaturated acid or of an ethylenically unsaturated acid anhydride c), and
from 0 to 40 % by weight of further monomers d), the percentages by weight being based on the polymer and the polymer being obtainable by polymerizing the monomers a) to d) in at least two stages which differ in their content of vinylaromatic compounds in such a way that the content of vinylaromatic compounds in the vinylaromatics-rich stage is at least 5 times as great as in the low-vinylaromatics stage or comprising an aqueous dispersion of the polymer, and additionally comprising a tackifying resin.

7. A substrate coated with a pressure-sensitive adhesive as claimed in claim 6.

8. A label coated with a pressure-sensitive adhesive as claimed in claim 6.

## Revendications

1. Polymère, constitué au total de
a) 50 à 99,98% en poids d'un (méth)acrylate d'alkyle en C₁ à C₁₂,
b) 0,02 à 5% en poids d'un composé vinylaromatique,
c) 0 à 10% en poids d'un acide à insaturation éthylénique ou d'un anhydride à insaturation éthylénique, et
d) 0 à 40% en poids d'autres monomères,
dans lequel les pourcentages pondéraux sont rapportés au polymère, et l'on peut obtenir le polymère par la polymérisation des monomères a) à d) en au moins deux étapes qui se distinguent par leur teneur en substances vinylaromatiques de telle sorte que la teneur en substances vinylaromatiques dans l'étape riche en substances vinylaromatiques est au moins 5 fois supérieure à celle dans l'étape pauvre en substances vinylaromatiques.

2. Polymère selon la revendication 1 que l'on peut obtenir par une polymérisation en émulsion.

3. Dispersion aqueuse contenant un polymère selon la revendication 1 ou 2.

4. Utilisation d'une dispersion aqueuse d'un polymère constitué au total de
a) 50 à 99,98% en poids d'un (méth)acrylate d'alkyle en C₁ à C₁₂,
b) 0,02 à 5% en poids d'un composé vinylaromatique,
c) 0 à 10% en poids d'un acide à insaturation éthylénique ou d'un anhydride à insaturation éthylénique, et
d) 0 à 40% en poids d'autres monomères,
dans laquelle les pourcentages pondéraux sont rapportés au polymère et l'on peut obtenir le polymère par la polymérisation des monomères a) à d), en au moins deux étapes, qui se distinguent par leur teneur en substances vinylaromatiques, de telle sorte que la teneur en substances vinylaromatiques dans l'étape riche en substances vinylaromatiques est au moins 5 fois supérieure à celle dans l'étape pauvre en substances vinylaromatiques, en tant que colle contact.

5. Utilisation selon la revendication 4, en tant que colle contact pour étiquettes.

6. Colle contact, contenant un polymère, constitué au total de
a) 50 à 99,98% en poids d'un (méth)acrylate d'alkyle en C₁ à C₁₂,
b) 0,02 à 5% en poids d'un composé vinylaromatique,
c) 0 à 10% en poids d'un acide à insaturation éthylénique ou d'un anhydride à insaturation éthylénique, et
d) 0 à 40% en poids d'autres monomères,
dans laquelle les pourcentages pondéraux sont rapportés au polymère, et l'on peut obtenir le polymère par la polymérisation des monomères a) à d) en au moins deux étapes, qui se distinguent par leur teneur en substances vinylaromatiques, de telle sorte que la teneur en substances vinylaromatiques dans l'étape riche en substances vinylaromatiques est au moins 5 fois supérieure à celle dans l'étape pauvre en substances vinylaromatiques, ou bien une dispersion aqueuse du polymère et en plus une résine conférant un pouvoir collant.

7. Substrats revêtus d'une colle contact selon la revendication 6.

8. Etiquettes revêtues d'une colle contact selon la revendication 6.
